# EUROPÄISCHE PATENTANMELDUNG

(11) **EP 3 339 796 A1**
(43) Veröffentlichungstag der Anmeldung: **27.06.2018**
(21) Anmeldenummer: 17201905.1
(22) Anmeldetag: 15.11.2017
(51) Int. Cl.: F41H 11/02, G01S 13/58, G01S 13/72, F41G 7/22

(54) **FLUGPFADBESTIMMUNGSVORRICHTUNG UND FLUGPFADBESTIMMUNGSVERFAHREN**

(30) Priorität: 23.12.2016 DE 102016015689
(71) Anmelder: MBDA Deutschland GmbH, 86529 Schrobenhausen (DE)
(72) Erfinder: NAGELRAUF, Bernd, 82194 Gröbenzell (DE)
(74) Vertreter: Isarpatent

(57) **Zusammenfassung**

Die vorliegende Erfindung offenbart eine Flugpfadbestimmungsvorrichtung (100) zum Bestimmen eines Flugpfads (110) eines Flugobjekts (1), mit einer Positionsbestimmungseinrichtung (101), welche ausgebildet ist, eine Position (102) des Flugobjekts (1) zu erfassen, einer Abgleicheinrichtung (103), welche ausgebildet ist, zu prüfen, ob die Position (102) des Flugobjekts (1) innerhalb eines vorgegebenen Annäherungspfads (105, 106) einer Anzahl vorgegebener Annäherungspfade (105, 106) liegt, und einer Pfadbestimmungseinrichtung (109), welche ausgebildet ist, wenn die Position (102) des Flugobjekts (1) innerhalb eines der vorgegebenen Annäherungspfade (105, 106) liegt, den jeweiligen Annäherungspfad (105, 106) als Flugpfad (110) des Flugobjekts (1) auszugeben. Ferner offenbart die vorliegende Erfindung ein entsprechendes Flugpfadbestimmungsverfahren.

## Beschreibung

Die vorliegende Erfindung bezieht sich auf eine Flugpfadbestimmungsvorrichtung und ein entsprechendes Flugpfadbestimmungsverfahren.

### Technisches Gebiet

Systeme zur Bestimmung eines Flugpfads eines Flugobjekts werden in einer Vielzahl von Anwendungen eingesetzt. Insbesondere können solche Systeme z.B. zur Luftverteidigung eingesetzt werden.

Insbesondere im Konfliktfall ist es vorteilhaft, die Ziele bzw. die zu den Zielen genutzten Routen z.B. von feindlichen Flugzeugen zu kennen.

Dazu wird üblicherweise die aktuelle Flugroute, also die Flugrichtung z.B. eines Flugzeugs beim Eintritt in den Erfassungsbereich eines Radars, erfasst und extrapoliert. Diese Extrapolation kann z.B. linear erfolgen.

### Offenbarung der Erfindung

Es ist eine Aufgabe der vorliegenden Erfindung eine verbesserte Flugpfadbestimmung zu ermöglichen.

Demgemäß offenbart die vorliegende Erfindung eine Flugpfadbestimmungsvorrichtung mit den Merkmalen des Patentanspruchs 1 und ein Flugpfadbestimmungsverfahren mit den Merkmalen des Patentanspruchs 9.

### Demgemäß ist vorgesehen:

Eine Flugpfadbestimmungsvorrichtung zum Bestimmen eines Flugpfads eines Flugobjekts, mit einer Positionsbestimmungseinrichtung, welche ausgebildet ist, eine Position des Flugobjekts zu erfassen, mit einer Abgleicheinrichtung, welche ausgebildet ist, zu prüfen, ob die Position des Flugobjekts innerhalb eines vorgegebenen Annäherungspfads einer Anzahl vorgegebener Annäherungspfade liegt, und mit einer Pfadbestimmungseinrichtung, welche ausgebildet ist, wenn die Position des Flugobjekts innerhalb eines der vorgegebenen Annäherungspfade liegt, den jeweiligen Annäherungspfad als Flugpfad des Flugobjekts auszugeben.

### Ferner ist vorgesehen:

Ein Flugpfadbestimmungsverfahren zum Bestimmen eines Flugpfads eines Flugobjekts, aufweisend Erfassen der Position des Flugobjekts, Prüfen ob die Position des Flugobjekts innerhalb eines vorgegebenen Annäherungspfads einer Anzahl vorgegebener Annäherungspfade liegt, und wenn die Position des Flugobjekts innerhalb eines der vorgegebenen Annäherungspfade liegt, Ausgeben des jeweiligen Annäherungspfad als Flugpfad des Flugobjekts.

Die vorliegende Erfindung basiert auf der Erkenntnis, dass Flugobjekte, also z.B. Flugzeuge oder Hubschrauber, ihr Ziel in einem Konflikt üblicherweise unerkannt bzw. möglichst gut geschützt erreichen wollen.

Die vorliegende Erfindung nutzt diese Erkenntnis und bestimmt den Flugpfad eines Flugobjekts nicht ausschließlich basierend auf dessen aktueller Position oder dessen aktueller Flugrichtung, sondern nutzt dazu eine Datenbasis, welche eine Reihe möglicher Annäherungspfade für Flugobjekte aufweist. Unter Annäherungspfaden sind dabei Flugpfade zu verstehen, die in Richtung potentieller Ziele der Flugobjekte führen und im Voraus als vorteilhaft identifiziert wurden, z.B. weil sie dem Flugobjekt besonderen Schutz bieten. Dies ist z.B. in einem Tal oder einer Schlucht der Fall. Die Identifikation der Annäherungspfade kann dabei manuell oder maschinell erfolgen.

Wird also ein Flugobjekt z.B. innerhalb der Reichweite der Positionsbestimmungseinrichtung, also z.B. eines Radars, erfasst, kann durch die Positionsbestimmungseinrichtung auch die Position des Flugobjekts erfasst werden.

Erkennt die Abgleicheinrichtung, dass die Position des Flugobjekts innerhalb eines der vorgegebenen Annäherungspfade liegt, geht die vorliegende Erfindung davon aus, dass das Flugobjekt dem Annäherungspfad folgen wird, da dieser vorteilhaft für das Flugobjekt ist, und dieses z.B. vor frühzeitiger Entdeckung oder vor Abfangversuchen schützen kann. Die Erfindung geht also nicht davon aus, dass ein Flugobjekt immer den direkten Weg nutzt, um ein Ziel zu erreichen, sondern vorteilhafte Umwege in Kauf nimmt.

Die Pfadbestimmungseinrichtung wird folglich denjenigen Annäherungspfad als Flugpfad des Flugobjekts ausgeben, in dem die aktuelle Position des Flugobjekts liegt.

Der Flugpfad kann dann z.B. visuell auf einem Bildschirm oder einer Projektionsfläche dargestellt werden.

Durch die Einbeziehung von Kenntnissen über das Gebiet, welches von einem Flugobjekt durchflogen wird, kann die vorliegende Erfindung mit sehr geringem Rechenaufwand den Flugpfad eines Flugobjekts ermitteln.

Es versteht sich, dass ein Flugobjekt, für welches bereits ein Flugpfad ermittelt wurde permanent überwacht werden kann und bei einer Abweichung von dem ermittelten Flugpfad ein neuer Flugpfad ermittelt werden kann.

Vorteilhafte Ausführungsformen und Weiterbildungen ergeben sich aus den Unteransprüchen sowie aus der Beschreibung unter Bezugnahme auf die Figuren.

In einer Ausführungsform kann die Flugpfadbestimmungsvorrichtung eine Zieldatenbank potentieller Flugziele aufweisen, wobei die Annäherungspfade Flugpfade zu den potentiellen Flugzielen aufweisen kann, und wobei die Annäherungspfade insbesondere automatisiert oder teilautomatisiert basierend auf einer Analyse topographischer Karten erstellt werden können. Die potentiellen Flugziele können z.B. für bestimmte Regionen oder Bereiche vorgegeben werden. Die Auswahl der potentiellen Flugziele kann dabei z.B. durch Experten und/oder entsprechenden Algorithmen getroffen werden, die für alle möglichen Ziele eine Gefährdungslage bestimmen und besonders gefährdete Ziele als potentielle Flugziele vorgeben. Solche Ziele können z.B. Kraftwerke, Brücken, militärische Einrichtungen oder dergleichen sein. Bei der automatisierten Bestimmung der Annäherungspfade können z.B. Geländeformen analysiert werden und Pfade bestimmt werden, die eine geschützte Annäherung an ein solcher Ziel ermöglichen. Die teilautomatisierte Bestimmung der möglichen Annäherungspfade kann z.B. die Bewertung oder Anpassung der automatisiert bestimmten Annäherungspfade durch entsprechendes Fachpersonal aufweisen.

In einer Ausführungsform kann die Pfadbestimmungseinrichtung eine Entfernungsbestimmungseinrichtung aufweisen, die ausgebildet sein kann, wenn die Position des Flugobjekts nicht innerhalb eines der vorgegebenen Annäherungspfade liegt, die Entfernung zwischen dem Flugobjekt und den potentiellen Flugzielen zu bestimmen und die Position des potentiellen Flugziels, welches dem Flugobjekt am nächsten ist, als Ende des Flugpfads des Flugobjekts zu bestimmen. Befindet sich das Flugobjekt nicht in einem der Annäherungspfade, geht die vorliegende Erfindung davon aus, dass das Flugobjekt das ihm am nächsten liegende Flugziel erreichen will. Dazu kann die aktuelle Position des Flugobjekts mit den Positionen der einzelnen Flugziele abgeglichen werden. Als potentielle Flugziele können dabei z.B. lediglich diejenigen Flugziele untersucht werden, die vor dem Flugobjekt liegen, die zu diesem also in einen sog. Bearingwinkel von +/- 90° liegen. Der Bearingwinkel kann auch definiert werden, als der Winkel zwischen dem aktuellen Richtungsvektor des Flugobjekts und der Verbindungsgerade zwischen dem Flugobjekt und dem jeweiligen Flugziel. Bei größeren bzw. flächig ausgedehnten Flugzielen kann jeweils der kleinste Winkel zwischen dem Richtungsvektor und der Verbindungsgerade von Flugobjekt zum Rand bzw. zur Grenze des jeweiligen Flugziels zur Bestimmung genutzt werden.

In einer Ausführungsform kann die Entfernungsbestimmungseinrichtung ausgebildet sein, bei gleicher Entfernung mehrerer potentieller Flugziele von dem Flugobjekt dasjenige Flugziel auszuwählen, dessen Verbindungslinie zu dem Flugobjekt den kleinsten Winkel zu dem aktuellen Richtungsvektor des Flugobjekts aufweist. Unter "gleicher Entfernung" können annähernd gleiche bzw. ähnliche Entfernungen verstanden werden, die sich z.B. nur um einen vorgegebenen Schwellwert unterscheiden. Da ein Flugobjekt üblicherweise versuchen wird, sein Ziel auf möglichst direktem bzw. kurzem Weg zu erreichen, kann durch die Bestimmung des Winkels zwischen dem Flugobjekt und dem jeweiligen Flugziel und dem Richtungsvektor des Flugobjekts sehr einfach das wahrscheinliche Ziel des Flugobjekts bestimmt werden.

In einer Ausführungsform kann die Pfadbestimmungseinrichtung ausgebildet sein, eine direkte Verbindungslinie bzw. Verbindungsgerade zwischen der aktuellen Position des Flugobjekts und dem bestimmten Ende des Flugpfads als Flugpfad des Flugobjekts auszugeben, wenn die Position des Flugobjekts nicht innerhalb eines der vorgegebenen Annäherungspfade liegt. Eine direkte Linie als Flugpfad anzunehmen, ermöglicht eine sehr einfache Berechnung des Flugpfads anhand der aktuellen Position des Flugobjekts und der Position des ausgewählten Flugziels.

In einer Ausführungsform kann die Pfadbestimmungseinrichtung ausgebildet sein, eine interpolierte Verbindungslinie zwischen einer bisherigen Flugbahn des Flugobjekts und dem bestimmten Ende des Flugpfads als Flugpfad des Flugobjekts auszugeben. Als Interpolation kann z.B. eine Polynominterpolation oder eine Spline-Interpolation genutzt werden. Mit Hilfe der Interpolation kann der bisherige Flugpfad des Flugobjekts berücksichtigt werden, indem z.B. Punkte des bisherigen Flugpfads mit in die Interpolation aufgenommen werden. Damit kann eine realistischere Flugbahn zu dem Flugziel bestimmt werden.

In einer Ausführungsform kann die Pfadbestimmungseinrichtung ausgebildet sein, zu bestimmen, ob einer der vorgegebenen Annäherungspfade zu dem als Ende des Flugpfads bestimmten Flugziel führt und den jeweiligen Annäherungspfad als Teilabschnitt des Flugpfads des Flugobjekts auszugeben, wenn ein Eintrittspunkt in den Annäherungspfad zwischen dem Flugobjekt und entsprechenden Flugziel vorhanden ist. Befindet sich einer der Annäherungspfade für das Flugobjekt günstig gelegen, ist es wahrscheinlich, dass das Flugobjekt seinen Kurs anpassen wird und den entsprechenden Annäherungspfad nutzen wird, um das Flugziel zu erreichen. Die Pfadbestimmungseinrichtung kann z.B. einen linearen Pfad von der aktuellen Position des Flugobjekts zu dem Eintrittspunkt und den weiteren Verlauf des Annäherungspfads zu dem Flugziel als Flugpfad ausgeben. Ein Annäherungspfad kann z.B. dann als Teil des Flugpfades angesehen bzw. ausgegeben werden, wenn er sich innerhalb eines vorgegebenen Winkels zu dem aktuellen Richtungsvektor des Flugobjekts, z.B. max. +/- 90°, und dem Flugziel befindet.

Ein Annäherungspfad wird sicherlich nicht als günstig angesehen, wenn kein geeigneter Eintrittspunkt zwischen der aktuellen Position des Flugobjekts und dem Flugziel vorhanden ist. Als Eintrittspunkte können zwar alle Punkte des Annäherungspfads dienen, allerding ist es nicht zwingend sinnvoll einen solchen Eintrittspunkt auch zu nutzen, da dies z.B. einen großen Umweg bedeuten würde. Die Pfadbestimmungseinrichtung kann daher z.B. unter Nutzung vorgegebener Kriterien eine Annahme darüber treffen, ob das Flugobjekt in den jeweiligen Annährungspfad einschwenken wird oder nicht.

In einer Ausführungsform kann die Pfadbestimmungseinrichtung ausgebildet sein denjenigen Punkt des Annährungspfads als Eintrittspunkt zu identifizieren, der den kürzesten Abstand zu den Flugobjekt aufweist, oder die Länge eines Umwegs zu berechnen, den ein Flugobjekt zurücklegen muss, um einen Annäherungspfad zu dem Flugziel zu erreichen, und einen Eintrittspunkt in den Annäherungspfad nur zu erkennen, wenn der berechnete Umweg unterhalb eines vorgegebenen Schwellwerts liegt, wobei der vorgegebene Schwellwert insbesondere als prozentualer Anteil des Abstands zwischen dem Flugobjekt und Flugziel vorgebeben sein kann. Befindet sich ein Flugzeug auf dem Weg zu einem Flugziel, versucht es dieses üblicherweise gut geschützt zu erreichen und wird dazu auch das Gelände als Deckung nutzen. Die vorliegende Erfindung geht daher in einer Ausführungsform davon aus, dass das Flugzeug den Annäherungspfad in jedem Fall nutzen wird. Alternativ kann berechnet werden, wie groß der Umweg ist, den das Flugobjekt in Kauf nehmen muss, um den Annäherungspfad nutzen zu können. Dadurch kann berücksichtigt werden, dass das Flugobjekts sein Ziel möglichst schnell erreichen will und daher nicht jeden Umweg in Kauf nehmen wird. Der Schwellwert für den Umweg kann z.B. 10% - 100%, 20% - 80% oder 50% betragen.

Es versteht sich, dass z.B. auch eine Identifikationseinrichtung vorgesehen sein kann, welche ausgebildet ist, zu identifizieren, ob ein erfasstes Flugobjekt überhaupt relevant ist. Beispielsweise kann die Flugpfadberechnung lediglich auf feindliche Flugzeuge angewendet werden und bei befreundeten Flugzeugen ausgesetzt werden. Ebenso kann die Relevanz der Flugzeuge auf ein vordefiniertes Gebiet beschränkt werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesse-rungen oder Ergänzungen zu der jeweiligen Grundform der vorliegenden Erfindung hinzufügen.

Es versteht sich, dass die einzelnen Elemente der vorliegenden Erfindung als Hardware, Software oder eine Kombination aus Hardware und Software ausgebildet sein können. Insbesondere können auch die Funktionen einzelner Elemente in einer Komponente vereint werden oder die Funktionen anders partitioniert werden.

### Kurze Beschreibung der Zeichnungen

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild einer Ausführungsform einer erfindungsgemäßen Flugpfadbestimmungsvorrichtung;
- Fig. 2: eine Karte mit einem Flugobjekt zur Veranschaulichung der vorliegenden Erfindung;
- Fig. 3: eine weitere Karte mit einem Flugobjekt zur Veranschaulichung der vorliegenden Erfindung;
- Fig. 4: eine weitere Karte mit einem Flugobjekt zur Veranschaulichung der vorliegenden Erfindung;
- Fig. 5: eine weitere Karte mit einem Flugobjekt zur Veranschaulichung der vorliegenden Erfindung; und
- Fig. 6: ein Ablaufdiagramm einer Ausführungsform eines erfindungsgemäßen Flugpfadbestimmungsverfahrens

In allen Figuren sind gleiche bzw. funktionsgleiche Elemente und Vorrichtungen - sofern nichts anderes angegeben ist - mit denselben Bezugszeichen inkrementiert um 100 versehen worden.

### Ausführungsformen der Erfindung

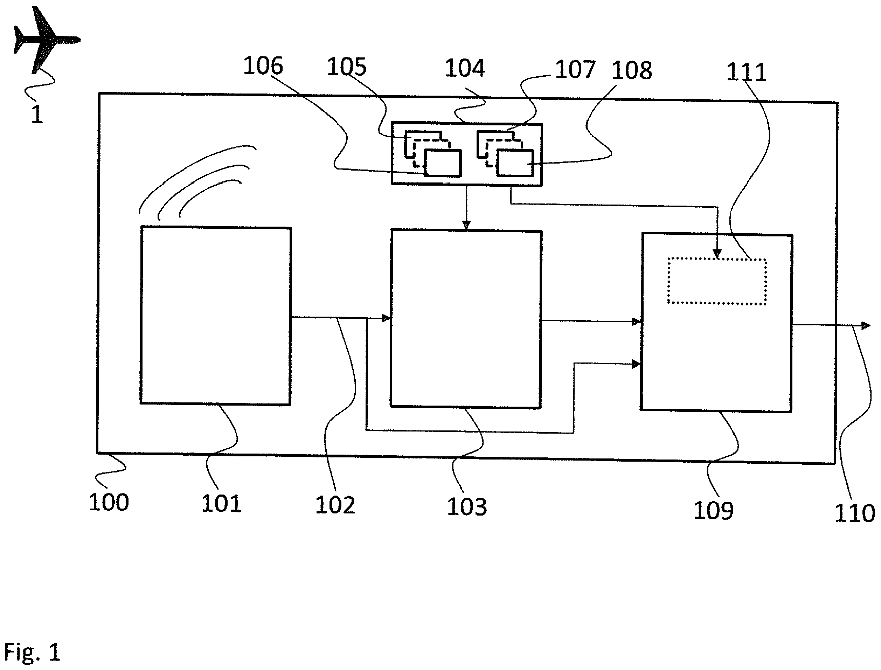

Die Flugpfadbestimmungsvorrichtung 100 der Fig. 1 weist eine Positionsbestimmungseinrichtung 101 auf, die mit einer Abgleicheinrichtung 103 gekoppelt ist. Die Abgleicheinrichtung 103 ist mit einer Zieldatenbank 104 und mit einer Pfadbestimmungseinrichtung 109 gekoppelt.

Die Positionsbestimmungseinrichtung 101 kann z.B. als einzelnes Radar, als vernetztes Radarsystem mit mehreren Radarsensoren oder als eine beliebige Art von Einrichtung ausgebildet sein, die die Position 102 des Flugobjekts 1 erfassen kann. Die Positionsbestimmungseinrichtung 101 leitet die erfasste Position 102 an die Abgleicheinrichtung 103 weiter. Die Abgleicheinrichtung 103 kann aus der Zieldatenbank 104 unterschiedliche Annäherungspfade 105, 106 auslesen und diese mit der aktuellen Position 102 des Flugobjekts 1 abgleichen. In der Zieldatenbank 104 sind lediglich die Annäherungspfade 105, 106 gezeigt. Weitere Annäherungspfade sind durch einen gestrichelt dargestellten Kasten angedeutet. Die Annäherungspfade 105, 106 kennzeichnen dabei Pfade, die ein Flugobjekt 1 vorteilhaft nutzen könnte, um sich den Flugzielen 107, 108 zu nähern. Beispielsweise können die Annäherungspfade 105, 106 dem Flugobjekt 1 besonderen Schutz bieten. In der Zieldatenbank 104 sind ferner potentielle Flugziele 107, 108 gespeichert.

Befindet sich das Flugobjekt 1 innerhalb eines der Annäherungspfade 105, 106, gibt die Abgleicheinrichtung 103 diese Information an die Pfadbestimmungseinrichtung 109 weiter, welche den jeweiligen Annäherungspfad 105, 106 dann als Flugpfad 110 des Flugobjekts 1 ausgibt.

Befindet sich das Flugobjekt 1 in keinem der Annäherungspfade 105, 106, kann die Pfadbestimmungseinrichtung 109 eine direkte Linie zwischen dem Flugobjekt 1 und dem Flugziel 107, 108 als Flugpfad 110 ausgeben.

Befinden sich allerdings mehrere Flugziele 107, 108 in der Nähe des Flugobjekts 1 bzw. vor dem Flugobjekt 1, muss die Pfadbestimmungseinrichtung 109 eines der Zeile auswählen. Die Pfadbestimmungseinrichtung 109 kann dazu optional (daher gepunktet gezeigt) z.B. eine Entfernungsbestimmungseinrichtung 111 aufweisen.

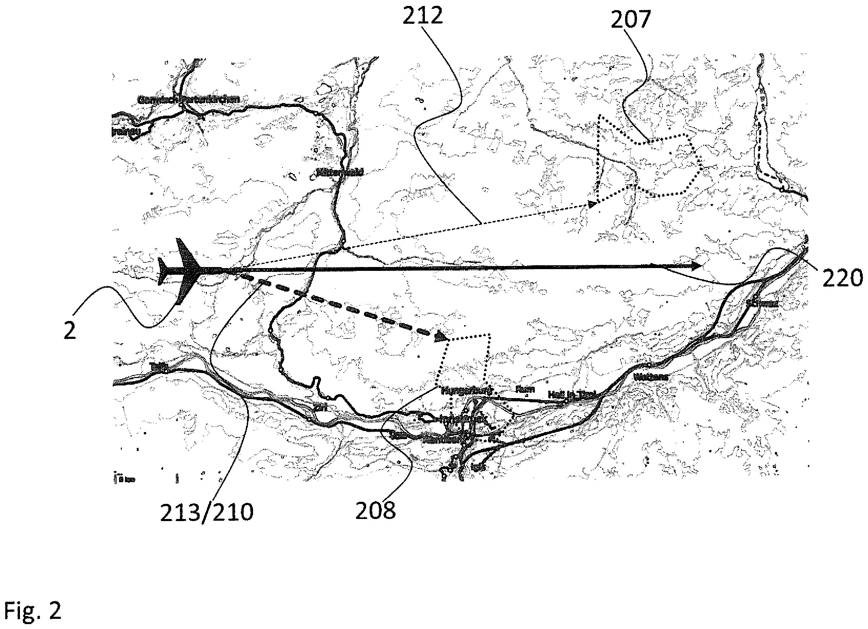

Die Entfernungsbestimmungseinrichtung 111 kann die Entfernung zwischen dem Flugobjekt 1 und den potentiellen Flugzielen 107, 108 bestimmen. Als Ende des Flugpfads 110 des Flugobjekts 1 kann dann die Position des potentiellen Flugziels 107, 108 ausgegeben werden, das dem Flugobjekt 1 am nächsten ist. Dies wird in Verbindung mit Fig. 2 im Detail erläutert.

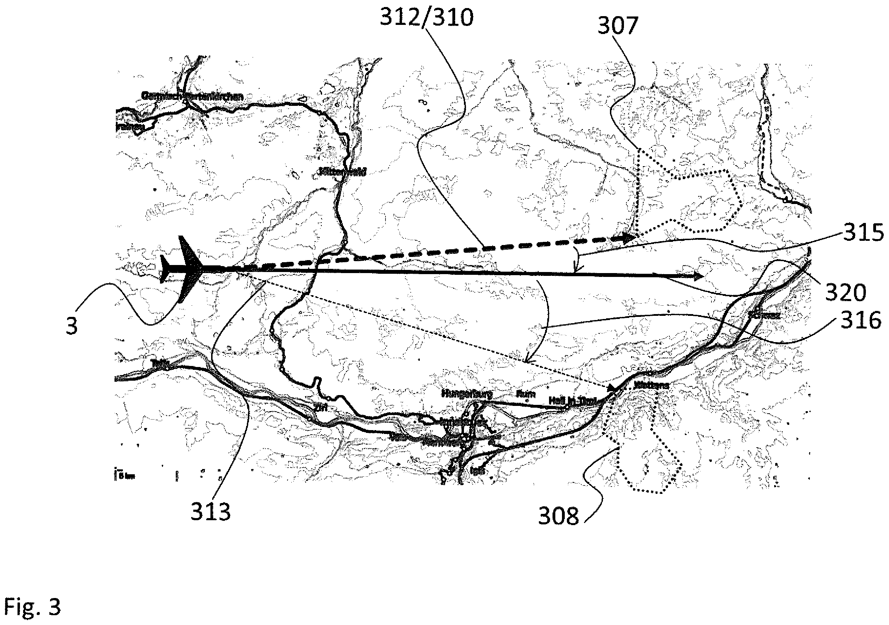

Die Entfernungsbestimmungseinrichtung 111 kann bei gleicher oder ähnlicher Entfernung mehrerer potentieller Flugziele 107, 108 von dem Flugobjekt 1 ausgebildet sein, den Winkel zwischen der Verbindungslinie von dem jeweiligen Flugziel 107, 108 zu dem Flugobjekt 1 und dem aktuellen Richtungsvektor des Flugobjekts 1 zu messen. Als Ende des Flugpfads 110 kann dann das Flugziel 107, 108 ausgegeben werden, dessen Verbindungslinie zu dem Flugobjekt 1 den kleinsten Winkel zu dem aktuellen Richtungsvektor des Flugobjekts 1 aufweist. Dies wird in Verbindung mit Fig. 3 im Detail erläutert.

Als Flugpfad 110 kann z.B. immer die direkte Verbindungslinie zwischen dem Flugobjekt 1 und dem Ende des Flugpfads 110 ausgegeben werden. Alternativ kann aber auch eine interpolierte Verbindungslinie zwischen einer bisherigen Flugbahn des Flugobjekt 1 und dem bestimmten Ende des Flugpfads 110 als Flugpfad 110 ausgegeben werden.

Die Pfadbestimmungseinrichtung 109 kann aber auch bestimmen, ob einer der vorgegebenen Annäherungspfade 105, 106 zu dem als Ende des Flugpfads 110 bestimmten Flugziel 107, 108 führt. Ist dies der Fall, kann die Pfadbestimmungseinrichtung 109 untersuchen, ob sich der jeweilige Annäherungspfad 105, 106 als Teilabschnitt des Flugpfads 110 eignet und diesen in den ausgegebenen Flugpfad 110 des Flugobjekts 1 aufnehmen, zumindest wenn ein Eintrittspunkt in den Annäherungspfad 105,106 zwischen dem Flugobjekt 1 und entsprechenden Flugziel 107, 108, 207 vorhanden ist.

Als Eintrittspunkt kann die Pfadbestimmungseinrichtung 109 z.B. denjenigen Punkt des Annährungspfads 105, 106 identifizieren, der den kürzesten Abstand zu dem Flugobjekt 1 aufweist. Zusätzlich kann die Pfadbestimmungseinrichtung 109 aber auch Kriterien prüfen, die aussagen, ob der jeweilige Annährungspfad 105, 106 überhaupt geeignet ist bzw. für das Flugobjekt 1 interessant sein könnte.

Beispielsweise kann die Pfadbestimmungseinrichtung 109 die Länge eines Umwegs berechnen, den ein Flugobjekt 1 zurücklegen muss, um einen Annäherungspfad 105, 106 zu dem Flugziel 107, 108 zu erreichen. Als geeignet kann der Annäherungspfad 105, 106 z.B. dann angesehen werden, wenn der berechnete Umweg unterhalb eines vorgegebenen Schwellwerts liegt. Der vorgegebene Schwellwert kann z.B. als prozentualer Anteil des Abstands zwischen dem Flugobjekt 1 und Flugziel 107, 108 oder als Absolutwert vorgebeben sein. Ist der jeweilige Annäherungspfad 105, 106 also geeignet, kann der dem Flugobjekt 1 am nächsten gelegen Punkt des Annährungspfads 105, 106 als Eintrittspunkt in den Annäherungspfad 105, 106 bestimmt werden.

Fig. 2 zeigt einen Ausschnitt einer Landkarte, auf der ein Flugzeug 2 dargestellt ist. Die Position des Flugzeugs 2 kann z.B, mit Hilfe der Positionsbestimmungseinrichtung 101, also z.B. mit einem Radar, erfasst werden. Mit Hilfe einer Positionsbestimmungseinrichtung 101 kann ferner auch die momentane Bewegungsrichtung des Flugzeugs 2 bzw. dessen Richtungsvektor 220 erfasst werden. Auf der Karte der Fig. 2 sind ferner zwei potentielle Flugziele 207 und 208 dargestellt. Um nun den Flugpfad 210 des Flugzeugs 2 zu bestimmen, berechnet die Pfadbestimmungseinrichtung 109 bzw. die Entfernungsbestimmungseinrichtung 111 die Entfernung 212 zwischen dem ersten Flugziel 207 und dem Flugzeug 2 und die Entfernung 213 zwischen dem zweiten Flugziel 208 und dem Flugzeug 2. Dasjenige Flugziel 207. 208, welches dem Flugzeug 2 am nächsten ist, wird als dessen tatsächliches Ziel ausgegeben. In Fig. 2 befindet sich das Flugziel 208 näher an dem Flugzeug 2. Daher wird der Flugpfad 210 als gerade Linie zwischen dem Flugzeug 2 und dem Flugziel 208 ausgeben.

Fig. 3 zeigt den gleichen Kartenausschnitt, der auch in Fig. 2 dargestellt ist. Allerdings befinden sich in Fig. 3 die Flugziele 307, 308 in etwa gleich weit von dem Flugzeug 3 entfernt.

Die Pfadbestimmungseinrichtung 109 bestimmt daher die Winkel 315, 316 zwischen dem Richtungsvektor 320 des Flugzeugs 2 und den Verbindungslinien zwischen dem Flugzeug 3 und den Flugzielen 307, 308. Im Fall ähnlicher oder (zumindest innerhalb vorgegebener Grenzen) gleicher Entfernungen 312, 313, wird nun dasjenige Flugziel 307, 308 als Flugziel ausgegeben, dessen Winkel 315, 316 am kleinsten ist. In diesem Fall das Flugziel 307. Auch in Fig. 3 ist der Flugpfad 310 als gerade Linie zwischen dem Flugzeug 3 und dem Flugziel 307 dargesteilt. Es versteht sich, dass anstelle einer geraden Linie auch eine interpolierte Kurve als Flugpfad ausgegeben werden könnte.

Ferner kann die Pfadbestimmungseinrichtung 109 den Flugpfad 310 z.B. auch dynamisch an das Gelände anpassen. Beispielsweise kann die Pfadbestimmungseinrichtung 109 den Flugpfad 310 um Berge herumleiten, wenn der Flugpfad diese kreuzen würde.

Die Darstellungen der Figs. 2 und 3 gehen davon aus, dass sich zwischen dem Flugzeug 2, 3 und den Flugzielen 207, 208, 307, 308 kein Annäherungspfad befindet.

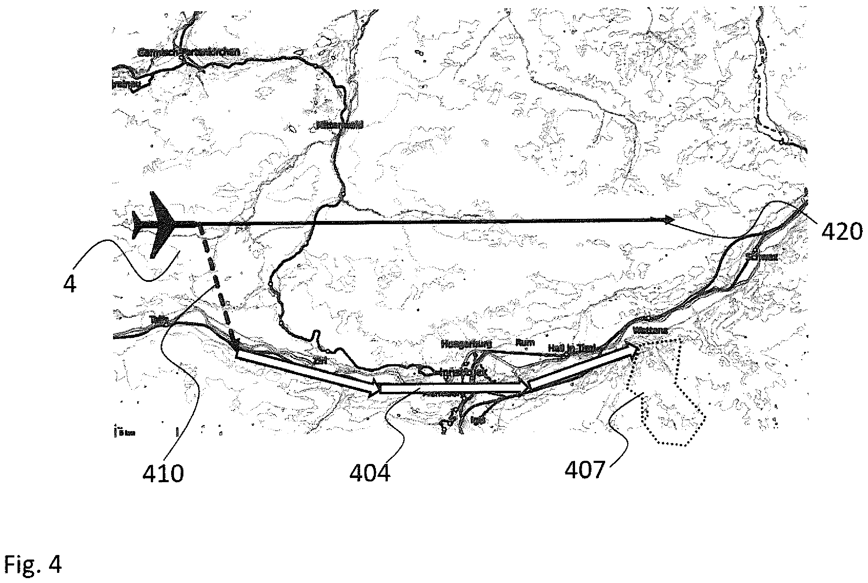

In Fig. 4 dagegen ist ein Annäherungspfad 404 zu dem einzigen Flugziel 407 der Fig. 4 dargestellt. Das Flugzeug 4 befindet sich nördlich des Annäherungspfads 404 und der Richtungsvektor 420 des Flugzeugs 4 ist in etwas parallel zu dem Annäherungspfad 404.

Da es sich bei dem Flugziel 407 um das einzige Flugziel in der Umgebung des Flugzeugs 4 handelt, wird nun der Weg von der aktuellen Position des Flugzeugs 4 zu dem Annäherungspfad 404 und daran anschließend der Annäherungspfad 404 als Flugpfad 410 ausgegeben. Bevor ein solcher Flugpfad 410 ausgegeben wird, kann ferner noch geprüft werden, wie groß der Umweg für das Flugzeug 4 im Vergleich zu einem direkten Anflug wäre. Der Flugpfad 410 entlang des Annäherungspfads 404 kann dann z.B. ausgegeben werden, wenn der Umweg unterhalb einer gewissen Schwelle liegt.

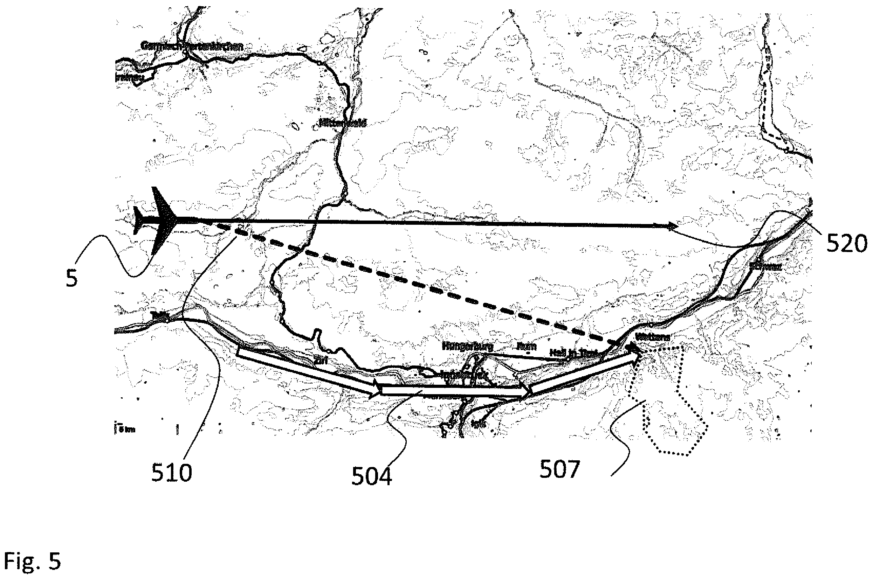

Fig. 5 zeigt die Situation der Fig. 4, allerdings wäre hier der Umweg über den Annäherungspfad 504 zu groß, sodass der direkte Weg zwischen aktueller Position des Flugzeugs 5 und dem Flugziel 507 als Flugpfad 510 ausgegeben wird.

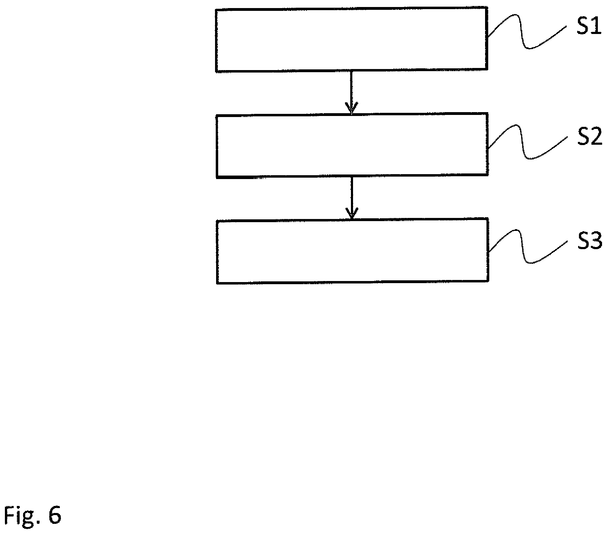

Fig. 6 zeig ein Flugpfadbestimmungsverfahren zum Bestimmen eines Flugpfads 110, 210, 310, 410, 510 eines Flugobjekts 1, 2, 3, 4, 5. Zum besseren Verständnis der Erklärungen zu dem Flugpfadbestimmungsverfahren werden die Bezugszeichen der Figs. 1 - 5 für die Beschreibung des Flugpfadbestimmungsverfahrens beibehalten.

Das Flugpfadbestimmungsverfahren weist das Erfassen S1 der Position 102 des Flugobjekts 1, 2, 3, 4, 5 auf. Ferner wird geprüft S2 ob die Position 102 des Flugobjekts 1, 2, 3, 4, 5 innerhalb eines vorgegebenen Annäherungspfads 105, 106, 404, 504 einer Anzahl vorgegebener Annäherungspfade 105, 106, 404, 504 liegt. Wenn die Position 102 des Flugobjekts 1, 2, 3, 4, 5 innerhalb eines der vorgegebenen Annäherungspfade 105, 106, 404, 504 liegt, wird der jeweilige Annäherungspfad 105, 106, 404, 504 als Flugpfad 110, 210, 310, 410, 510 des Flugobjekts 1, 2, 3, 4, 5 ausgegeben S3.

Die Annäherungspfade 105, 106, 404, 504 können Flugpfade 110, 210, 310, 410, 510 zu den potentiellen Flugzielen 107, 108, 207, 208, 307, 308, 407, 507 aufweisen und in einer Zieldatenbank 104 potentieller Flugziele 107, 108, 207, 208, 307, 308, 407, 507 gespeichert werden. Die Annäherungspfade 105, 106, 404, 504 können z.B. automatisiert oder teilautomatisiert basierend auf einer Analyse topographischer Karten erstellt werden.

Wenn die Position 102 des Flugobjekts 1, 2, 3, 4, 5 aber nicht innerhalb eines der vorgegebenen Annäherungspfade 105, 106, 404, 504 liegt, kann die Entfernung 212, 213, 312, 313 zwischen dem Flugobjekt 1, 2, 3, 4, 5 und den potentiellen Flugzielen 107, 108, 207, 208, 307, 308, 407, 507 bestimmt werden. Ferner kann die Position des potentiellen Flugziels 107, 108, 207, 208, 307, 308, 407, 507, welches dem Flugobjekt 1, 2, 3,4, 5 am nächsten ist, als Ende des Flugpfads 110, 210, 310, 410, 510 des Flugobjekts 1, 2, 3, 4, 5 bestimmt werden.

Bei gleicher Entfernung 212, 213, 312, 313 mehrerer potentieller Flugziele 107, 108, 207, 208, 307, 308, 407, 507 von dem Flugobjekt 1, 2, 3, 4, 5 kann dasjenige Flugziel 107, 108, 207, 208, 307, 308, 407, 507, dessen Verbindungslinie zu dem Flugobjekt 1, 2, 3, 4, 5 den kleinsten Winkel 315, 316 zu dem aktuellen Richtungsvektor des Flugobjekts 1, 2, 3, 4, 5 aufweist, als Ende des Flugpfads 110, 210, 310, 410, 510 des Flugobjekts 1, 2, 3,4, 5 bestimmt werden.

Der Flugpfad 110, 210, 310, 410, 510 kann z.B. als eine direkte Verbindungslinie zwischen der aktuellen Position 102 des Flugobjekts 1, 2, 3, 4, 5 und dem bestimmten Ende des Flugpfads 110, 210, 310,410, 510 ausgebeben werden, wenn die Position 102 des Flugobjekts 1, 2, 3, 4, 5 nicht innerhalb eines der vorgegebenen Annäherungspfade 105, 106, 404, 504 liegt. Alternativ kann eine interpolierte Verbindungslinie zwischen einer bisherigen Flugbahn des Flugobjekts 1, 2, 3, 4, 5 und dem bestimmten Ende des Flugpfads 110, 210, 310, 410, 510 als Flugpfad 110, 210, 310, 410, 510 des Flugobjekts 1, 2, 3, 4, 5 ausgebeben werden.

Schließlich kann bestimmt werden, ob einer der vorgegebenen Annäherungspfade 105, 106, 404, 504 zu dem als Ende des Flugpfads 110, 210, 310, 410, 510 bestimmten Flugziel 107, 108, 207, 208, 307, 308, 407, 507 führt und der jeweilige Annäherungspfad 105, 106, 404, 504 als Teilabschnitt des Flugpfads 110, 210, 310, 410, 510 des Flugobjekts 1, 2, 3, 4, 5 ausgebeben werden, wenn ein Eintrittspunkt in den Annäherungspfad 105, 106, 404, 504 zwischen dem Flugobjekt 1, 2, 3, 4, 5 und entsprechenden Flugziel 107, 108, 207, 208, 307, 308, 407, 507 vorhanden ist.

Als Eintrittspunkt kann derjenige Punkt des Annährungspfads 105, 106 identifiziert werden, der den kürzesten Abstand zu den Flugobjekt 1, 2, 3, 4, 5 hat. Alternative kann z.B. die Länge eines Umwegs berechnet werden, den ein Flugobjekt 1, 2, 3, 4, 5 zurücklegen muss, um einen Annäherungspfad 105, 106, 404, 504 zu dem Flugziel 107, 108, 207, 208, 307, 308, 407, 507 zu erreichen. Ein geeigneter Eintrittspunkt in den Annäherungspfad 105, 106, 404, 504 kann z.B. nur dann erkannt werden, wenn der berechnete Umweg unterhalb eines vorgegebenen Schwellwerts liegt. Dieser kann z.B. als prozentualer Anteil des Abstands zwischen dem Flugobjekt 1, 2, 3, 4, 5 und Flugziel 107, 108, 207, 208, 307, 308, 407, 507 oder als Absolutwert vorgebeben werden.

Es versteht sich, dass ein Flugobjekt permanent bzw. kontinuierlich mit Hilfe der vorliegenden Erfindung überwacht werden kann. Bei einer Abweichung des Kurses des Flugobjekts von dem ausgegebenen Flugpfad kann also z.B. ein neuer Flugpfad berechnet werden.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

### Bezugszeichen

- 1, 2, 3, 4, 5: Flugobjekt
- 100: Flugpfadbestimmungsvorrichtung
- 101: Positionsbestimmungseinrichtung
- 102: Position
- 103: Abgleicheinrichtung
- 104: Zieldatenbank
- 105, 106, 404, 504: Annäherungspfad
- 107, 108, 207, 208: Flugziel
- 307, 308, 407,507: Flugziel
- 109: Pfadbestimmungseinrichtung
- 110, 210, 310, 410, 510: Flugpfad
- 111: Entfernungsbestimmungseinrichtung
- 212, 213, 312, 313: Entfernung
- 315, 316: Winkel

- 220, 320, 420, 520: Richtungsvektor

## Patentansprüche

1. Flugpfadbestimmungsvorrichtung (100) zum Bestimmen eines Flugpfads (110, 210, 310, 410, 510) eines Flugobjekts (1, 2, 3, 4, 5), mit:
einer Positionsbestimmungseinrichtung (101), welche ausgebildet ist, eine Position (102) des Flugobjekts (1, 2, 3, 4, 5) zu erfassen,
einer Abgleicheinrichtung (103), welche ausgebildet ist, zu prüfen, ob die Position (102) des Flugobjekt (1, 2, 3, 4, 5) innerhalb eines vorgegebenen Annäherungspfads (105, 106, 404, 504) einer Anzahl vorgegebener Annäherungspfade (105, 106, 404, 504) liegt, und
einer Pfadbestimmungseinrichtung (109), welche ausgebildet ist, wenn die Position (102) des Flugobjekts (1, 2, 3, 4, 5) innerhalb eines der vorgegebenen Annäherungspfade (105, 106, 404, 504) liegt, den jeweiligen Annäherungspfad (105, 106, 404, 504) als Flugpfad (110, 210, 310, 410, 510) des Flugobjekts (1, 2, 3, 4, 5) auszugeben.

2. Flugpfadbestimmungsvorrichtung (100) nach Anspruch 1, mit einer Zieldatenbank (104) potentieller Flugziele (107, 108, 207, 208, 307, 308, 407, 507), wobei die Annäherungspfade (105, 106, 404, 504) Flugpfade (110, 210, 310, 410, 510) zu den potentiellen Flugzielen (107, 108, 207, 208, 307, 308, 407, 507) aufweisen, und wobei die Annäherungspfade (105, 106, 404, 504) insbesondere automatisiert oder teilautomatisiert basierend auf einer Analyse topographischer Karten erstellt werden.

3. Flugpfadbestimmungsvorrichtung (100) nach Anspruch 2, wobei die Pfadbestimmungseinrichtung (109) eine Entfernungsbestimmungseinrichtung (111) aufweist, die ausgebildet ist, wenn die Position (102) des Flugobjekts (1, 2, 3, 4, 5) nicht innerhalb eines der vorgegebenen Annäherungspfade (105, 106, 404, 504) liegt, die Entfernung (212, 213, 312, 313) zwischen dem Flugobjekt (1, 2, 3, 4, 5) und den potentiellen Flugzielen (107, 108, 207, 208, 307, 308, 407, 507) zu bestimmen und die Position des potentiellen Flugziels (107, 108, 207, 208, 307, 308, 407, 507), welches dem Flugobjekt (1, 2, 3, 4, 5) am nächsten ist, als Ende des Flugpfads (110, 210, 310, 410, 510) des Flugobjekts (1, 2, 3,4, 5) zu bestimmen.

4. Flugpfadbestimmungsvorrichtung (100) nach Anspruch 3, wobei die Entfernungsbestimmungseinrichtung (111) ausgebildet ist, bei gleicher Entfernung (212, 213, 312, 313) mehrerer potentieller Flugziele (107, 108, 207, 208, 307, 305, 407, 507) von dem Flugobjekt (1, 2, 3, 4, 5) dasjenige Flugziel (107,108, 207, 208, 307, 308, 407, 507) auszuwählen, dessen Verbindungslinie zu dem Flugobjekt (1, 2, 3, 4, 5) den kleinsten Winkel (315, 316) zu dem aktuellen Richtungsvektor des Flugobjekts (1, 2, 3, 4, 5) aufweist.

5. Flugpfadbestimmungsvorrichtung (100) nach einem der vorherigen Ansprüche 3 und 4, wobei die Pfadbestimmungseinrichtung (109) ausgebildet ist, eine direkte Verbindungslinie zwischen der aktuellen Position (102) des Flugobjekts (1, 2, 3, 4, 5) und dem bestimmten Ende des Flugpfads (110, 210, 310, 410, 510) als Flugpfad (110, 210, 310, 410, 510) des Flugobjekts (1, 2, 3, 4, 5) auszugeben, wenn die Position (102) des Flugobjekts (2, 2, 3, 4, 5) nicht innerhalb eines der vorgegebenen Annäherungspfade (105, 106, 404, 504) liegt.

6. Flugpfadbestimmungsvorrichtung (100) nach einem der vorherigen Ansprüche 3 und 4, wobei die Pfadbestimmungseinrichtung (109) ausgebildet ist, eine interpolierte Verbindungslinie zwischen einer bisherigen Flugbahn des Flugobjekts (1, 2, 3, 4, 5) und dem bestimmten Ende des Flugpfads (110, 210, 310, 410, 510) als Flugpfad (110, 210, 310, 410, 510) des Flugobjekts (1, 2, 3,4, 5) auszugeben.

7. Flugpfadbestimmungsvorrichtung (100) nach einem der vorherigen Ansprüche 3 bis 6, wobei die Pfadbestimmungseinrichtung (109) ausgebildet ist, zu bestimmen, ob einer der vorgegebenen Annäherungspfade (105, 106, 404, 504) zu dem als Ende des Flugpfads (110, 210, 310, 410, 510) bestimmten Flugziel (107, 108, 207, 208, 307, 308, 407, 507) führt und den jeweiligen Annäherungspfad (105, 106, 404, 504) als Teilabschnitt des Flugpfads (110, 210, 310, 410, 510) des Flugobjekts (1, 2, 3, 4, 5) auszugeben, wenn ein Eintrittspunkt in den Annäherungspfad (105, 106, 404, 504) zwischen dem Flugobjekt (1, 2, 3, 4, 5) und dem entsprechenden Flugziel (107, 108, 207, 208, 307, 308, 407, 507) vorhanden ist.

8. Flugpfadbestimmungsvorrichtung (100) nach Anspruch 7, wobei die Pfadbestimmungseinrichtung (109) ausgebildet ist:
denjenigen Punkt des Annährungspfads (105, 106) als Eintrittspunkt zu identifizieren, der den kürzesten Abstand zu dem Flugobjekt (1, 2, 3, 4, 5) aufweist, oder
die Länge eines Umwegs zu berechnen, den ein Flugobjekt (1, 2, 3, 4, 5) zurücklegen muss, um einen Annäherungspfad (105, 106, 404, 504) zu dem Flugziel (107, 108, 207, 208, 307, 308, 407, 507) zu erreichen, und einen Eintrittspunkt in den Annäherungspfad (105, 106, 404, 504) nur zu erkennen, wenn der berechnete Umweg unterhalb eines vorgegebenen Schwellwerts liegt, wobei der vorgegebene Schwellwert insbesondere als prozentualer Anteil des Abstands zwischen dem Flugobjekt (1, 2, 3, 4, 5) und dem Flugziel (107, 108, 207, 208, 307, 308, 407, 507) vorgebeben ist.

9. Flugpfadbestimmungsverfahren zum Bestimmen eines Flugpfads (110, 210, 310, 410, 510) eines Flugobjekts (1, 2, 3, 4, 5), aufweisend:
Erfassen (S1) der Position (102) des Flugobjekts (1, 2, 3, 4, 5),
Prüfen (S2) ob die Position (102) des Flugobjekts (1, 2, 3, 4, 5) innerhalb eines vorgegebenen Annäherungspfads (105, 106, 404, 504) einer Anzahl vorgegebener Annäherungspfade (105, 106, 404, 504) liegt, und
wenn die Position (102) des Flugobjekts (1, 2, 3, 4, 5) innerhalb eines der vorgegebenen Annäherungspfade (105, 106, 404, 504) liegt, Ausgeben (S3) des jeweiligen Annäherungspfads (105, 106, 404, 504) als Flugpfad (110, 210, 310, 410, 510) des Flugobjekts (1, 2, 3, 4, 5).

10. Flugpfadbestimmungsverfahren nach Anspruch 9, wobei die Annäherungspfade (105, 106, 404, 504) Flugpfade (110, 210, 310, 410, 510) zu den potentiellen Flugzielen (107, 108, 207, 208, 307, 308, 407, 507) aufweisen und in einer Zieldatenbank (104) potentieller Flugziele (107, 108, 207, 208, 307, 308, 407, 507) gespeichert werden, und wobei die Annäherungspfade (105, 106, 404, 504) insbesondere automatisiert oder teilautomatisiert basierend auf einer Analyse topographischer Karten erstellt werden.

11. Flugpfadbestimmungsverfahren nach Anspruch 10, ferner aufweisend, wenn die Position (102) des Flugobjekts (1, 2, 3, 4, 5) nicht innerhalb eines der vorgegebenen Annäherungspfade (105, 106, 404, 504) liegt, Bestimmen der Entfernung (212, 213, 312, 313) zwischen dem Flugobjekt (1, 2, 3, 4, 5) und den potentiellen Flugzielen (107, 108, 207, 208, 307, 308, 407, 507) und Bestimmen der Position des potentiellen Flugziels (107, 108, 207, 208, 307, 308, 407, 507), welches dem Flugobjekt (1, 2, 3, 4, 5) am nächsten ist, als Ende des Flugpfads (110, 210, 310, 410, 510) des Flugobjekts (1, 2, 3, 4, 5).

12. Flugpfadbestimmungsverfahren nach Anspruch 11, bei gleicher Entfernung (212, 213, 312, 313) mehrerer potentieller Flugziele (107, 108, 207, 208, 307, 308, 407, 507) von dem Flugobjekt (1, 2, 3, 4, 5) ferner aufweisend Auswählen desjenigen Flugziels (107, 108, 207, 208, 307, 308, 407, 507), dessen Verbindungslinie zu dem Flugobjekt (1, 2, 3, 4, 5) den kleinsten Winkel (315, 316) zu dem aktuellen Richtungsvektor des Flugobjekts (1, 2, 3, 4, 5) aufweist.

13. Flugpfadbestimmungsverfahren nach einem der vorherigen Ansprüche 11 und 12, aufweisend Ausgeben einer direkten Verbindungslinie zwischen der aktuellen Position (102) des Flugobjekts (1, 2, 3, 4, 5) und dem bestimmten Ende des Flugpfads (110, 210, 310, 410, 510) als Flugpfad (110, 210, 310, 410, 510) des Flugobjekts (1, 2, 3, 4, 5), wenn die Position (102) des Flugobjekts (1, 2, 3, 4, 5) nicht innerhalb eines der vorgegebenen Annäherungspfade (105, 106, 404, 504) liegt, oder
Ausgeben einer interpolierten Verbindungslinie zwischen einer bisherigen Flugbahn des Flugobjekts (1, 2, 3, 4, 5) und dem bestimmten Ende des Flugpfads (110, 210, 310, 410, 510) als Flugpfad (110, 210, 310, 410, 510) des Flugobjekts (1, 2, 3, 4, 5).

14. Flugpfadbestimmungsverfahren nach einem der vorherigen Ansprüche 11 bis 13, aufweisend Bestimmen, ob einer der vorgegebenen Annäherungspfade (105, 106, 404, 504) zu dem als Ende des Flugpfads (110, 210, 310, 410, 510) bestimmten Flugziel (107, 108, 207, 208, 307, 308, 407, 507) führt und Ausgeben des jeweiligen Annäherungspfads (105, 106, 404, 504) als Teilabschnitt des Flugpfads (110, 210, 310, 410, 510) des Flugobjekts (1, 2, 3, 4, 5), wenn ein Eintrittspunkt in den Annäherungspfad (105, 106, 404, 504) zwischen dem Flugobjekt (1, 2, 3, 4, 5) und dem entsprechenden Flugziel (107, 108, 207, 208, 307, 308, 407, 507) vorhanden ist.

15. Flugpfadbestimmungsverfahren nach Anspruch 14, ferner aufweisend Identifizieren desjenigen Punkts des Annährungspfads (105, 106) als Eintrittspunkt, der den kürzesten Abstand zu dem Flugobjekts (1, 2, 3, 4, 5) aufweist, oder
Berechnen der Länge eines Umwegs, den ein Flugobjekt (1, 2, 3, 4, 5) zurücklegen muss, um einen Annäherungspfad (105, 106, 404, 504) zu dem Flugziel (107, 108, 207, 208, 307, 308, 407, 507) zu erreichen, und Erkennen eines Eintrittspunkt in den Annäherungspfad (105, 106, 404, 504) nur, wenn der berechnete Umweg unterhalb eines vorgegebenen Schwellwerts liegt, wobei der vorgegebene Schwellwert insbesondere als prozentualer Anteil des Abstands zwischen dem Flugobjekt (1, 2, 3, 4, 5) und dem Flugziel (107, 108, Z07, 208, 307, 308, 407, 507) vorgebeben wird.
